# FASCICULE DE BREVET EUROPEEN

(11) **EP 1 296 570 B1**
(45) Date de publication et mention de la délivrance du brevet: **10.05.2006**
(21) Numéro de dépôt: 01949528.2
(22) Date de dépôt: 26.06.2001
(51) Int. Cl.: A23L 1/223, A23B 7/022, A23B 7/154

(54) **PRODUIT VEGETAL DESHYDRATE ET SON PROCEDE D'OBTENTION**
ENTWÄSSERTES PFLANZLICHES MATERIAL UND DESSEN HERSTELLUNGSVERFAHREN
DEHYDRATED VEGETABLE PRODUCT AND METHOD FOR OBTAINING SAME

(30) Priorité: 03.07.2000 FR 0008574
(43) Date de publication de la demande: 02.04.2003
(73) Titulaire: DUCROS, 84971 Carpentras Cedex (FR)
(72) Inventeur: COLONAT, Jean-François, F-26170 Mollans Sur Ouveze (FR); BOUILLON, Régis, F-55200 VERTUZEY (FR); OLLIVIER, Gilbert, F-84810 Aubignan (FR)
(74) Mandataire: Grosset-Fournier, Chantal Catherine
(86) Numéro de dépôt international: PCT/FR2001/002016
(87) Numéro de publication internationale: WO 2002/001968

(56) Documents cités:
- EP-A- 0 331 281
- EP-A- 0 995 360
- WO-A-92/10946
- US-A- 2 432 222
- US-A- 4 447 460
- US-A- 5 858 446

## Description

La présente invention concerne un produit végétal déshydraté, notamment de type herbe, plante aromatique, plante médicinale, épice, ainsi qu'un procédé d'obtention dudit produit végétal déshydraté.

Les produits végétaux fraîchement récoltés ne sont pour la plupart disponibles qu'à des saisons précises et dans un périmètre, géographique limité. Leur durée de conservation est réduite et ce, particulièrement lorsqu'ils sont découpés pour être prêts à l'emploi. Ils sont sujets à des dégradations microbiologiques, à des altérations d'arômes et de couleur très rapides, dues principalement aux enzymes. Ils se flétrissent et leur texture se modifie.

Il est donc particulièrement avantageux de déshydrater les produits végétaux frais, afin de permettre une conservation prolongée de leurs propriétés. Différentes techniques de déshydratation ont été mises au point afin de disposer de produits végétaux prêts à l'emploi toute l'année, et dont les propriétés sont conservées.

Une première technique de déshydratation, qui est la plus connue, est un procédé traditionnel qui remonte à la plus Haute Antiquité. Il consiste tout simplement en une exposition au soleil de produits végétaux cuits. Cependant ce procédé présente notamment l'inconvénient majeur de la nécessité d'une grande surface disponible pour la mise en oeuvre de procédé.

Un second procédé de déshydratation, plus moderne, consiste en la lyophilisation. Il s'agit d'une sublimation à basse température réalisée sous vide qu'on fait subir à certains produits. On procède dans un premier temps à une surgélation, puis on « sublime » l'eau en créant une dépression de 10⁻³ à 1 mm de Hg. Lors de la surgélation, l'eau contenue dans les produits se transforme de liquide en glace et, par conséquent, fait éclater les cellules du produit, ce qui permet de ce fait aux grosses molécules, et notamment celles produisant ou étant des arômes, de s'évaporer conjointement avec l'eau. Ce procédé présente donc l'inconvénient de faire perdre aux produits une grande partie de leurs qualités organoleptiques.

Un troisième procédé de déshydratation de produits végétaux très connu également est le séchage par air chaud. On fait circuler de l'air chaud sur les produits à déshydrater à une température de l'ordre de 70°C pendant des dizaines d'heures, ce qui revient en fait à une véritable cuisson des produits, c'est-à-dire à un éclatement des cellules, et par conséquent, une perte encore plus importante de leurs qualités gustatives.

En outre, d'autres documents, par example US 4,447,460, WO 92/10946 et US 2,432,222, ont décrit des traitements de conservation de produits végétaux par déshydratation/imprégnation osmotique.

A cet égard, la demande internationale WO 92/10946 a pour objet un procédé de préparation de plantes aromatiques déshydratées comportant une étape d'immersion de la plante à déshydrater dans un bain liquide, à une température d'au moins 82,2°C (180°F), contenant un agent osmotique capable d'infuser dans le tissu de la plante et de former un solide amorphe enrobant la plante lors du séchage et, une étape de séchage de la plante ainsi infusée et enrobée. Un exemple d'agent osmotique est notamment un monosaccharide ou un disaccharide. Ainsi selon le procédé décrit dans cette demande, le sucre infuse le tissu végétal de la plante et constitue un solide amorphe qui enrobe la surface de la plante déshydratée.

L'enrobage a pour inconvénient principal de créer un croutage des produits traités, ce qui conduit à une texture dure et cassante. Par ailleurs, lors de la consommation, le saccharide qui enrobe le végétal procure une première sensation très sucrée alors que les plantes déshydratées sont utilisées essentiellement dans des plats salés.

Cependant à ce jour, aucun des procédés de l'art antérieur ne permet d'obtenir un produit végétal déshydraté, dont les propriétés organoleptiques sont conservées pendant une durée de plusieurs mois, notamment à température ambiante.

L'un des buts de la présente invention est de fournir un produit végétal déshydraté dont les propriétés organoleptiques du produit végétal d'origine correspondant sont conservées, pendant une durée de plusieurs mois, notamment à température ambiante.

L'un des autres buts de l'invention est de fournir un procédé de déshydratation particulièrement avantageux pour l'obtention de produits déshydratés.

La présente invention a pour objet un produit végétal substantiellement déshydraté, notamment herbe, plante aromatique ou épice, caractérisé en ce qu'il présente les caractéristiques suivantes :
- une teneur en sel minéral de 8% à 15% en poids par rapport au poids total dudit produit végétal,
- une teneur en glucide ou en polyol de 4% à 15% en poids par rapport au poids total dudit produit végétal, notamment d'environ 5% à environ 10%,
- une teneur en eau de 10% à 30% en poids par rapport au poids total dudit produit végétal, notamment d'environ 13% à environ 18%,
- une activité de l'eau (aw) de 0,5 à 0,7, notamment d'environ 0,55 à environ 0,65,
- la conservation des propriétés organoleptiques du produit végétal d'origine correspondant, pendant une durée d'au moins 5 mois, et notamment de 5 mois à environ 12 mois, à une température d'au moins 15°C, notamment d'environ 18°C à environ 22°C
- le produit végétal étant tel qu'il est substantiellement dépourvu de la flore initiale présente sur le produit végétal d'origine correspondant, qu'il est substantiellement dépourvu du développement de micro organismes, et qu'il présente une inactivation des enzymes principalement responsables de la dégradation de la couleur et de l'odeur.

Par produit végétal « substantiellement » déshydraté, on entend un produit présentant une teneur en eau de 10% à 30% en poids par rapport au poids total dudit produit végétal.

Par « produit végétal d'origine correspondant », on entend le produit végétal frais, c'est-à-dire tel que fraîchement récolté, avant toute autre transformation.

Les propriétés organoleptiques sont principalement la flaveur, le goût, la texture et l'aspect visuel présentés par le produit végétal d'origine. Par aspect visuel, on entend principalement la couleur mais aussi tout ce qui est relatif à la forme et à l'état de surface (lisse ou granuleux, brillant ou mat...)

De façon avantageuse, le produit végétal déshydraté selon l'invention est tel qu'il présente une inactivation des enzymes principalement responsables de la dégradation de la couleur et de l'odeur des produits végétaux chlorophylliens.

Lorsque le produit végétal substantiellement déshydraté présente une teneur en sel minéral inférieure à 8%, la déshydratation est insuffisante et le produit obtenu se conserve moins bien.

Lorsque le produit végétal substantiellement déshydraté présenté une teneur en sel minéral supérieure à 15%, le produit est trop déshydraté et présente un goût trop salé susceptible de masquer les arômes.

Une teneur en glucide ou en polyol inférieure à 4% implique une imprégnation en sel excessive.

Une teneur en glucide ou en polyol supérieure à 15% risque d'empêcher l'imprégnation en sel et rend le produit collant, ce qui peut être gênant lors du séchage ultérieur.

Un produit végétal dont la teneur en eau est inférieure à 10%, présente une texture cassante et se réhydrate difficilement lors de son utilisation.

Une teneur en eau supérieure à 30% nuit à la conservation en rendant possible les actions enzymatiques et le développement des microorganismes.

Un produit végétal dont l'activité de l'eau est inférieure à 0,5 est trop sec, sa texture n'est pas souple et il se réhydrate mal lors de son utilisation.

Une activité de l'eau supérieure à 0,7 ne permet pas une bonne conservation à température ambiante à cause des risques microbiologique (surtout levures et moisissures).

Selon un mode de réalisation avantageux de l'invention, le produit végétal tel que défini ci-dessus présente en outre la conservation des propriétés d'élasticité du produit végétal d'origine correspondant.

Un produit élastique reprend sa forme initiale après avoir été déformé ou comprimé, lorsque la contrainte qu'on lui a fait subir est annulée (voir exemple 4).

Par produit végétal, on désigne notamment :
- les herbes et les plantes aromatiques,
- les épices,
- les algues alimentaires,
- les plantes médicinales.

Les herbes sont notamment celles choisies dans le groupe constitué par l'aneth, le basilic, le persil, le cerfeuil, la coriandre, le cresson, l'estragon, la menthe, le persil ou le laurier.

Les plantes aromatiques sont notamment celles choisies dans le groupe constitué par le thym, le romarin, la sarriette, la marjolaine, l'origan, l'oseille ou la sauge.

Par plantes aromatiques, on englobe également des fleurs à usage aromatique alimentaire telles que la rose, le jasmin ou la fleur d'oranger.

Les épices sont notamment ceux choisis dans le groupe constitué par le gingembre, le poivre vert, le clou de girofle, le piment, les baies de genièvre ou les baies roses.

Les plantes médicinales sont notamment celles choisies dans le groupe constitué par la mélisse, la verveine, la camomille, la passiflore, l'ortie, la vigne rouge, la lavande ou le tussilage.

Selon un autre mode de réalisation avantageux de l'invention, le produit végétal tel que défini ci-dessus est caractérisé en ce que :
- le sel minéral est choisi dans le groupe constitué par des sels halogénés et est notamment le chlorure de sodium,
- le glucide est choisi dans le groupe constitué par les mono, di ou oligosaccharides, et est notamment le saccharose, le fructose, le glucose, le lactose ou le maltose,
- le polyol est notamment le sorbitol ou le glycérol.

La présente invention a également pour objet l'utilisation d'une solution contenant :
* 55 % à 70 % d'eau, en poids par rapport au poids total de ladite solution, notamment d'environ 65 % à 70 %,
* 15% à 30% de sel minéral, en poids par rapport au poids total de ladite solution, notamment d'environ 20% à environ 25%,
* 10% à 30% de glucide ou de polyol, en poids par rapport au poids total de ladite solution, notamment d'environ 14% à environ 25% de glucide ou de polyol, et de préférence d'environ 14,5% à environ 16,5% de polyol, et de préférence d'environ 19 % à environ 22 % de glucide,
afin d'obtenir un produit végétal substantiellement déshydraté présentant une conservation des propriétés organoleptiques du produit végétal d'origine correspondant, pendant une durée d'au moins 5 mois, et notamment de 5 mois à environ 12 mois, à une température d'au moins 15°C, notamment d'environ 18°C à environ 22°C.

Selon un mode de réalisation avantageux de l'invention, l'utilisation de la solution telle que définie ci-dessus permet d'effectuer par immersion à la fois le blanchiment, l'imprégnation et la déshydratation d'un produit végétal, notamment d'une herbe, d'une plante aromatique ou d'une épice.

On entend par immersion l'action de plonger le végétal dans la solution aqueuse contenant le sel minéral et le glucide ou le polyol. Le résultat de l'immersion est l'imprégnation et la déshydratation partielle.

On entend par blanchiment l'opération de cuisson partielle appliquée à des végétaux pour assurer l'inactivation de leurs enzymes. On procède en général à l'immersion des végétaux dans de l'eau chaude ou bouillante.

La présente invention a encore pour objet un procédé d'obtention d'un produit végétal substantiellement déshydraté à partir d'un produit végétal de départ, notamment herbe, plante aromatique ou épice, à l'issue duquel les propriétés organoleptiques du produit végétal d'origine correspondant au produit végétal de départ sont conservées à long terme et à température ambiante, ledit procédé étant caractérisé en ce qu'il comprend les étapes suivantes :
- trempage du produit végétal de départ dans une solution de trempage contenant :
   * 55 % à 70 % d'eau, en poids par rapport au poids total de ladite solution, notamment d'environ 65 % à 70 %,
   * 15% à 30% de sel minéral, en poids par rapport au poids total de ladite solution, notamment d'environ 20% à environ 25%,
   * 10% à 30% de glucide ou de polyol, en poids par rapport au poids total de ladite solution, notamment d'environ 14% à environ 25% de glucide ou de polyol, et de préférence d'environ 14,5% à 16,5% de polyol, et de préférence d'environ 19 % à environ 22 % pour le glucide,
   pour obtenir un produit végétal partiellement déshydraté,
- séchage du produit végétal partiellement déshydraté obtenu à l'issue de l'étape de trempage afin d'obtenir un produit végétal substantiellement déshydraté présentant :
   * une teneur en sel minéral de 8% à 15% en poids par rapport au poids total dudit produit végétal,
   * une teneur en glucide ou en polyol de 4% à 15% en poids par rapport au poids total dudit produit végétal, notamment d'environ 5% à environ 10%,
   * une teneur en eau de 10% à 30% en poids par rapport au poids total dudit produit végétal, notamment d'environ 13% à environ 18%,
   * une activité de l'eau de 0,5 à 0,7, notamment d'environ 0,55 à environ 0,65,
   * la conservation des propriétés organoleptiques du produit végétal d'origine correspondant au produit végétal de départ, pendant une durée d'au moins 5 mois, notamment de 5 mois à environ 12 mois, à une température d'au moins 15°C, notamment d'environ 18°C à environ 22°C.

L'étape de trempage effectuée à l'aide de la solution de trempage telle que définie ci-dessus, permet avantageusement d'extraire une partie de l'eau de constitution du produit végétal, tout en transférant dans ledit produit végétal des solutés provenant de la solution de trempage (imprégnation).

Ainsi l'étape de trempage permet avantageusement d'effectuer à la fois le blanchiment, l'imprégnation et la déshydratation partielle du produit végétal.

Le produit végétal de départ utilisé dans le procédé de l'invention tel que décrit ci-dessus peut être :
- un produit végétal frais ou un produit végétal frais mis sous forme surgelée et,
- un produit végétal entier ou, une ou des parties dudit produit végétal telle(s) que tige(s), racine(s), feuille(s) ou fleurs.

En outre, le produit végétal utilisé dans le procédé de l'invention tel que décrit ci-dessus est notamment choisi dans le groupe constitué par :
- les herbes et les plantes aromatiques,
- les épices,
- les algues alimentaires,
- les plantes médicinales,
et notamment parmi : l'aneth, le basilic, le persil, le cerfeuil, la coriandre, le cresson, l'estragon, la menthe, le persil, le laurier, l'oseille, l'origan, le thym, le romarin, la sarriette, la marjolaine, la sauge, le gingembre, le poivre vert, le clou de girofle, le piment, les baies de genièvre, les baies roses, la mélisse, la verveine, la camomille, la passiflore, l'ortie, la vigne rouge, le tussilage, la lavande, la rose, la fleur de jasmin ou la fleur d'oranger.

Dans la solution de trempage utilisée dans le cadre du procédé de l'invention tel que décrit ci-dessus :
- le sel minéral est choisi dans le groupe constitué par les sels halogénés et est notamment le chlorure de sodium,
- le glucide est choisi dans le groupe constitué par les mono, di ou oligosaccharides, et est notamment le saccharose, le fructose, le glucose, le lactose ou le maltose,
- le polyol est notamment le sorbitol ou le glycérol.

Selon un mode de réalisation avantageux du procédé de l'invention, la solution de trempage peut contenir en outre :
- un composé comportant l'ion magnésium, tel que celui choisi dans le groupe constitué par l'hydroxyde, l'acétate, le carbonate ou le chlorure de magnésium, notamment en une quantité d'environ 0,1% à environ 0,3% en poids par rapport au poids total de la solution de trempage, et de préférence d'environ 0,2% et/ou,
- un acidifiant tel que l'acide citrique, notamment en une quantité d'environ 0,1 % à environ 0,3 % en poids par rapport au poids total de la solution de trempage.

Le composé comportant l'ion magnésium permet de conserver l'intégrité du noyau chlorophyllien du produit végétal, et ainsi permettra d'obtenir un produit végétal substantiellement déshydraté dont la couleur sera stable à long terme.

Le rôle de l'acidifiant est double, il sert tout d'abord d'exhausteur de goût puis il a un effet microbiologique favorable, par abaissement du pH.

Selon un autre mode de réalisation avantageux du procédé de l'invention, le trempage du produit végétal dans la solution de trempage est effectué à une température d'environ 70°C à environ 120°C, notamment d'environ 85°C à environ 100°C, pendant un temps d'environ 2 minutes à environ 15 minutes, notamment d'environ 5 minutes à environ 10 minutes.

Selon un autre mode de réalisation avantageux, le procédé de l'invention comprend avant l'étape de trempage :
- une étape de lavage du produit végétal de départ, notamment dans de l'eau comportant éventuellement un désinfectant alimentaire tel que l'hypochlorite de sodium, ladite étape de lavage étant éventuellement suivie d'une étape de rinçage, notamment dans de l'eau et,
- une étape d'essorage du produit végétal, notamment par centrifugation.

La centrifugation est effectuée par exemple à une vitesse d'environ 300 tours par minute à environ 900 tours par minuté, pendant environ 1 minute à environ 3 minutes.

Selon un autre mode de réalisation avantageux, le procédé comprend à l'issue de l'étape de trempage une étape d'essorage afin d'obtenir un produit végétal partiellement déshydraté présentant :
* une teneur en sel minéral d'environ 5% à environ 10% en poids par rapport au poids total dudit produit végétal, notamment d'environ 7% à environ 9%,
* une teneur en glucide ou en polyol d'environ 2 % à environ 5 % en poids par rapport au poids total dudit produit végétal, notamment d'environ 3% à environ 4%,
* une teneur en eau d'environ 40% à environ 60% en poids par rapport au poids total dudit produit végétal,
* une activité de l'eau d'environ 0,7 à environ 0,9, notamment d'environ 0,75 à environ 0,85.

Ainsi, on entend par « produit végétal partiellement déshydraté » un produit végétal contenant une teneur en eau supérieure à celle du produit végétal substantiellement déshydraté obtenu à l'issue des différentes étapes du procédé de l'invention tel que décrit ci-dessus, mais une teneur en eau inférieure à celle du produit végétal de départ.

Ainsi, dans ce qui précède et dans ce qui suit, on désigne par produit végétal partiellement déshydraté, le produit végétal obtenu à l'issue de l'étape de trempage du procédé de l'invention et après essorage, contenant 40% à environ 60% d'eau.

Selon un mode de réalisation avantageux du procédé de l'invention, l'essorage du produit végétal obtenu à l'issue de l'étape de trempage est effectué par centrifugation, à une vitesse d'environ 300 tours par minute à environ 900 tours par minute, pendant environ 1 minute à environ 3 minutes.

Plus particulièrement, la centrifugation est effectuée dans un premier temps à une vitesse d'environ 300 tours par minute à environ 400 tours par minute pendant environ 1 minute puis, dans un deuxième temps à une vitesse d'environ 800 tours par minute pendant environ 1 minute.

Selon un mode de réalisation avantageux du procédé de l'invention, le séchage du produit végétal obtenu à l'issue de l'étape de trempage et d'essorage, est effectué par soufflage d'air chaud à humidité contrôlée, à une température d'environ 40°C à environ 70°C, pendant un temps d'environ 5 minutes à environ 30 minutes.

Plus particulièrement, le séchage est effectué dans un premier temps à une température d'environ 55°C à environ 70°C pendant environ 5 minutes à environ 15 minutes, puis éventuellement dans un deuxième temps à une température d'environ 40°C à environ 45°C, pendant environ 20 minutes à environ 25 minutes. Le séchage est suivi d'un temps de repos dont le rôle est de permettre le refroidissement du produit végétal et un rééquilibrage de la teneur en eau entre les différentes parties de la plante. Le temps de repos peut varier de 3 à 48 heures et est de préférence de 5 à 9 heures.

Selon un autre mode de réalisation avantageux de l'invention, le procédé comprend après l'étape de séchage :
- une étape de coupe du produit végétal substantiellement déshydraté, suivie d'une étape de triage pour séparer les feuilles, les tiges et les fleurs du susdit produit végétal,
- une étape de conditionnement du produit végétal substantiellement déshydraté, notamment sous atmosphère normale ou sous vide,
lequel peut être conservé soit à la température de 18°C à 22°C, soit à 4°C, soit à -20°C.

L'étape de coupe a pour but de couper le produit végétal substantiellement déshydraté afin d'obtenir des morceaux d'environ 5 mm à environ 7 mm. Elle peut être effectuée à l'aide d'une coupeuse bi-dimensionnelle alimentée par un tapis, procurant des coupes en carrés, lanières ou bâtonnets à partir du produit végétal substantiellement déshydraté. De nombreuses dimensions de lanières, bâtonnets ou carrés peuvent être obtenues en combinant les différents arbres de coupe circulaire ou transversale de la coupeuse.

L'étape de triage est notamment effectuée par tamisage vibrant et sur colonne densimétrique.

Selon un mode de réalisation avantageux, le procédé de l'invention est caractérisé en ce qu'il comprend les étapes suivantes :
- lavage du produit végétal de départ, notamment dans de l'eau comportant éventuellement un désinfectant alimentaire tel que l'hypochlorite de sodium, ladite étape de lavage étant éventuellement suivie d'une étape de rinçage, notamment dans de l'eau et,
- essorage du produit végétal, notamment par centrifugation, à une vitesse d'environ 300 tours par minute à environ 500 tours par minute, pendant environ 1 min à environ 3 min,
- trempage du produit végétal de départ dans une solution de trempage contenant :
   * 55% à 70% d'eau, en poids par rapport au poids total de la solution de trempage, notamment d'environ 65% à 70%,
   * 15% à 30% de sel minéral, en poids par rapport au poids total de la solution de trempage, notamment le chlorure de sodium, notamment d'environ 20% à environ 25%,
   * 10% à 30% de glucide, notamment choisi dans le groupe constitué par le saccharose, le fructose, le glucose, le lactose ou le maltose ou, 10% à 30% de polyol, notamment le sorbitol ou le glycérol, en poids par rapport au poids total de la solution de trempage, notamment d'environ 14% à environ 25%, et de préférence d'environ 14,5% à 16,5% de polyol et de préférence d'environ 19% à environ 22% de glucide, et éventuellement,
   * environ 0,1% à environ 0,3% d'un composé comportant l'ion magnésium, tel que l'hydroxyde, l'acétate, le carbonate ou le chlorure de magnésium, notamment 0,2% en poids par rapport au poids total de la solution de trempage,
ledit trempage étant effectué à une température d'environ 70°C à environ 120°C, notamment d'environ 85°C à environ 100°C, pendant un temps d'environ 2 minutes à environ 15 minutes, notamment d'environ 5 minutes à environ 10 minutes,
- essorage du produit végétal obtenu à l'issue de l'étape de trempage, notamment par centrifugation, à une vitesse d'environ 300 tours par minute à environ 900 tours par minute, pendant environ 1 minute à environ 3 minutes, pour obtenir un produit végétal partiellement déshydraté,
- séchage du produit végétal partiellement déshydraté obtenu à l'issue de l'étape d'essorage, notamment par soufflage d'air chaud à humidité contrôlée, à une température d'environ 40°C à environ 70°C, pendant un temps d'environ 5 minutes à environ 30 minutes,
afin d'obtenir un produit végétal substantiellement déshydraté,
- coupe du produit végétal substantiellement déshydraté, suivie d'une étape de triage pour séparer les feuilles, les tiges et les fleurs du susdit produit végétal, lequel triage est par exemple effectué par tamisage vibrant et sur colonne densimétrique,
- conditionnement du produit végétal substantiellement déshydraté, notamment sous atmosphère normale ou sous vide, lequel peut être conservé soit à la température de 18°C à 22°C, soit à 4°C, soit à-20°C.

L'invention a également pour objet un produit végétal substantiellement déshydraté susceptible d'être obtenu par mise en oeuvre du procédé tel que décrit ci-dessus.

### Description des figures

La figure 1 représente la caractérisation de la texture du persil substantiellement déshydraté selon le procédé de l'invention, sous contraintes mécaniques. Plus particulièrement la figure 1 représente la force de résistance et l'élasticité (en Newtons) en fonction du temps (en secondes), du persil substantiellement déshydraté.

La figure 2 représente la caractérisation de la texture du persil frais sous contraintes mécaniques. Plus particulièrement la figure 2 représente la force de résistance et l'élasticité (en Newtons) en fonction du temps (en secondes), du persil frais.

Les exemples ci-après illustrent l'invention, ils ne la limitent en aucune façon.

### Exemple 1 : Préparation de persil substantiellement déshydraté.

Le produit végétal de départ utilisé dans l'exemple ci-après est du persil frais. Les différentes étapes du procédé de l'invention sont décrites ci-après :
- lavage de 10 kg de persil frais dans de l'eau claire pendant 3 minutes, suivi d'une étape de rinçage à l'eau claire pendant 1 minute,
- premier essorage du persil par centrifugation, à une vitesse de 400 tours par minute, pendant environ 1 minute,
- trempage du persil à une température de 85°C pendant 6 minutes dans une solution de trempage contenant :
   * 64,3% d'eau,
   * 20,9% de chlorure de sodium (NaCl),
   * 14,6% de sorbitol,
   * 0,2% d'hydroxyde de magnésium (MgOH),
- deuxième essorage du persil par centrifugation, effectuée dans un premier temps à une vitesse de 400 tours par minute pendant 1 minute, puis dans un deuxième temps à une vitesse de 800 tours par minute pendant 1 minute,
   afin d'obtenir 3,07 kg de persil partiellement déshydraté contenant :
   * 42% d'eau,
   * 7% de chlorure de sodium (NaCl),
   * 4% de sorbitol,
   * une activité de l'eau de 0,810,
- séchage du persil partiellement déshydraté à une température de 60°C pendant 14 minutes, par soufflage d'air chaud à 20% d'humidité relative,
   afin d'obtenir 2,14 kg de persil substantiellement déshydraté contenant :
   * 16,7% d'eau,
   * 10,5% de chlorure de sodium (NaCl),
   * 5,7% de sorbitol,
   * une activité de l'eau de 0,635,
- coupe du persil substantiellement déshydraté obtenu à l'étape décrite ci-dessus, et récupération de 2,07 kg de morceaux de persil substantiellement déshydraté,
- triage des morceaux de persil substantiellement déshydraté, et récupération des feuilles ou morceaux de feuilles, les tiges ayant été écartées (rendement du triage = 60%) pour obtenir 1,25 kg de persil substantiellement déshydraté par rapport à 2,07 kg de persil issu de la coupe.

Ainsi, à partir de 10 kg de persil frais, on a obtenu 1,25 kg de persil substantiellement déshydraté ; le facteur de réduction pondéral est donc de 8 par rapport au persil frais.

### Conclusion :

Les qualités organoleptiques du produit déshydraté sont très proches de celles du produit fiais et se maintiennent plus de 12 mois à 20°C et 24 mois à 4°C. La teneur en huile essentielle est une bonne indication de la qualité aromatique du produit. Les valeurs suivantes, exprimées en mg/kg par rapport à la matière sèche, ont été mesurées :
- persil frais 6.550
- persil substantiellement déshydraté selon l'invention 4.100
- persil déshydraté par séchage (exemple comparatif) 2.700

### Exemple 2 : Préparation d'estragon substantiellement déshydraté.

Le produit végétal de départ utilisé dans l'exemple ci-après est de l'estragon frais. Les différentes étapes du procédé de l'invention sont décrites ci-après :
- lavage de 10 kg d'estragon frais dans de l'eau claire pendant 3 minutes, suivi d'une étape de rinçage à l'eau claire pendant 1 minute,
- premier essorage de l'estragon par centrifugation, à une vitesse de 400 tours par minute, pendant environ 1 minute,
- trempage de l'estragon à une température de 85°C pendant 6 minutes dans une solution de trempage contenant :
   * 64,2% d'eau,
   * 20,9% de chlorure de sodium (NaCl),
   * 14,6% de sorbitol,
   * 0,2% d'hydroxyde de magnésium (MgOH),
   * 0, 1 % d'acide citrique,
- deuxième essorage de l'estragon par centrifugation, effectuée dans un premier temps à une vitesse de 400 tours par minute pendant 1 minute, puis dans un deuxième temps à une vitesse de 800 tours par minute pendant 1 minute,
   afin d'obtenir 4,70 kg d'estragon partiellement déshydraté contenant :
   * 41% d'eau,
   * 7% de chlorure de sodium (NaCl),
   * 3% de sorbitol,
   * une activité de l'eau de 0,821,
- séchage de l'estragon partiellement déshydraté à une température de 60°C pendant 17 minutes, par soufflage d'air chaud à 20% d'humidité relative,
   afin d'obtenir 3,42 kg d'estragon substantiellement déshydraté contenant :
   * 18,9% d'eau,
   * 9,6% de chlorure de sodium (NaCl),
   * 4,1% de sorbitol,
   * une activité de l'eau de 0,668,
- coupe de l'estragon substantiellement déshydraté obtenu à l'étape décrite ci-dessus, et récupération de 3,31 kg de morceaux d'estragon substantiellement déshydraté,
- triage des morceaux d'estragon substantiellement déshydraté, et récupération des feuilles morceaux de feuilles, les tiges ayant été écartées ; le rendement du triage est de 50% ; 1,65 kg d'estragon substantiellement déshydraté sont obtenus à partir de 3,31 kg d'estragon avant triage.

Ainsi, à partir de 10 kg d'estragon frais, on a obtenu 1,65 kg d'estragon substantiellement déshydraté ; le facteur de réduction pondéral est donc de 6 par rapport à l'estragon frais.

### Conclusion :

Les qualités organoleptiques du produit déshydraté sont très proches de celles du produit frais et se maintiennent plus de 12 mois à 20°C et 24 mois à 4°C. La teneur en huile essentielle est une bonne indication de la qualité aromatique du produit. Les valeurs suivantes, exprimées en mg/kg par rapport à la matière sèche, ont été mesurées :
- estragon frais 17.000
- estragon substantiellement déshydraté selon l'invention 16.000
- estragon déshydraté par séchage (exemple comparatif) 6.700

### Exemple 3 : Préparation de basilic substantiellement déshydraté.

Le produit végétal de départ utilisé dans l'exemple ci-après est du basilic frais. Les différentes étapes du procédé de l'invention sont décrites ci-après :
- lavage de 10 kg de basilic frais dans de l'eau claire pendant 3 minutes, suivi d'une étape de rinçage à l'eau claire pendant 1 minute,
- premier essorage de l'estragon par centrifugation, à une vitesse de 400 tours par minute, pendant environ 1 minute,
- trempage de l'estragon à une température de 100°C pendant 6 minutes dans une solution de trempage contenant :
   * 67,8% d'eau,
   * 16% de chlorure de sodium (NaCl),
   * 16% de sorbitol,
   * 0,2% d'hydroxyde de magnésium (MgOH),
- deuxième essorage du basilic par centrifugation, effectuée dans un premier temps à une vitesse de 400 tours par minute pendant 1 minute, puis dans un deuxième temps à une vitesse de 800 tours par minute pendant 1 minute,
   afin d'obtenir 2,68 kg de basilic partiellement déshydraté contenant :
   * 43% d'eau,
   * 10% de chlorure de sodium (NaCl),
   * 5% de sorbitol,
   * une activité de l'eau de 0,831,
- séchage du basilic partiellement déshydraté à une température de 60°C pendant 15 minutes, par soufflage d'air chaud à 20% d'humidité relative,
   afin d'obtenir 1,85 kg de basilic substantiellement déshydraté contenant :
   * 17,3% d'eau,
   * 14,5% de chlorure de sodium (NaCl),
   * 7,2% de sorbitol,
   * une activité de l'eau de 0,646,
- coupe du basilic substantiellement déshydraté obtenu à l'étape décrite ci-dessus, et récupération de 1,79 kg de morceaux de basilic substantiellement déshydraté,
- triage des morceaux de basilic substantiellement déshydraté, et récupération des morceaux de feuilles les tiges ayant été écartées ; on obtient un rendement (après triage) en basilic substantiellement déshydraté de 53% (0,95 kg de basilic obtenu à partir de 1,79 kg de basilic avant triage)

Ainsi, à partir de 10 kg de basilic frais, on a obtenu 0,95 kg de basilic substantiellement déshydraté ; le facteur de réduction pondéral est donc de 10,5 par rapport au basilic frais.

### Conclusion :

Les qualités organoleptiques du produit déshydraté sont très proches de celles du produit frais et se maintiennent plus de 12 mois à 20°C et 24 mois à 4°C. La teneur en huile essentielle est une bonne indication de la qualité aromatique du produit. Les valeurs suivantes, exprimées en mg/kg par rapport à la matière sèche, ont été mesurées :
- basilic frais 5.000
- basilic substantiellement déshydraté selon l'invention 2.500
- basilic lyophilisé (exemple comparatif) 2.000

### Exemple 4 : Appréciation de la texture du produit végétal substantiellement déshydraté

La texture du produit végétal substantiellement déshydraté comparativement à la texture du produit végétal de départ frais est appréciée par la mesure de force traduisant ainsi sa résistance à l'aide d'une machine de traction/compression.

Le produit végétal substantiellement déshydraté étudié ci-dessous est du persil.

Le matériel utilisé dans le cadre de la détermination de la texture du produit végétal substantiellement déshydraté est listé ci-dessous :
- machine de traction-compression de marque ADAMEL-LHOMARGY et de type DY31,
- capteur force de 10 Newtons,
- mobile de mesure en plastique : cylindre plastique 20 mm (diam.) x 50mm (hauteur)
- logiciel de pilotage AUTOTRAC,
- récipient de mesure : pot plastique de diamètre d'au moins 65 mm.

Le protocole de mesure est décrit ci-après :
- type d'essai : compression et pilotage en allongement,
- température de l'échantillon : ambiante,
- nombre de mesure : 3 mesures sur 3 prises d'échantillon.
- résumé du programme d'essai :
   * force de départ : 0.2 N
   * pénétration : -13 mm à 20 mm/min (étape 1)
   * stabilité à cette position de -13 mm pendant 3 minutes (étape 2)
   * remontée rapide de 2 mm soit une position de -11 mm à 200 mm/min (étape 3)
   * stabilité à cette position de -11 mm pendant 2 minutes (étape 4),
- paramètres mesurés : moyenne sur les 3 essais des valeurs de forces mesurées (Newton) aux étapes 1, 2, 3 et 4.

L'étape 1 représente la force de résistance à la pénétration du mobile. L'étape 2 représente la force de résistance du végétal exercée sur le mobile fixe. L'étape 3 représente l'élasticité à la sortie du mobile. L'étape 4 représente l'élasticité du végétal sur le mobile fixe.

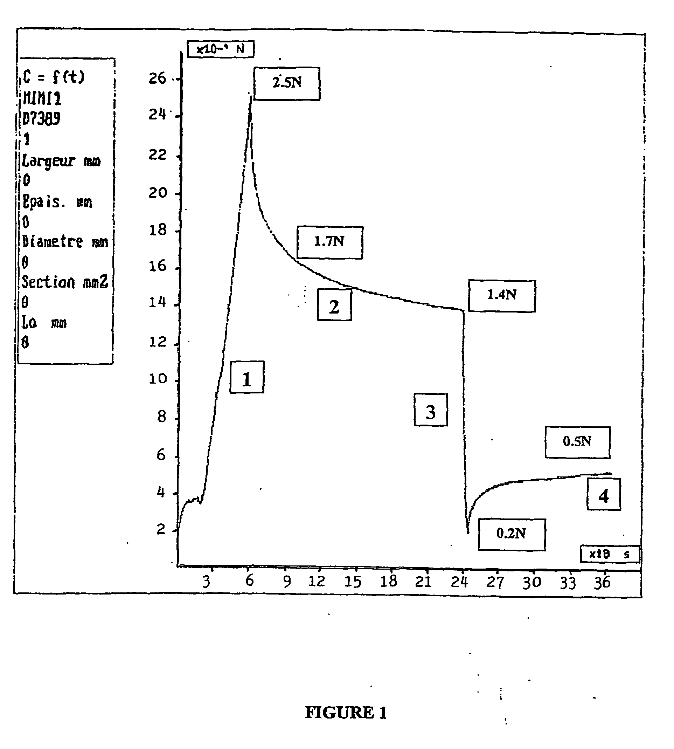

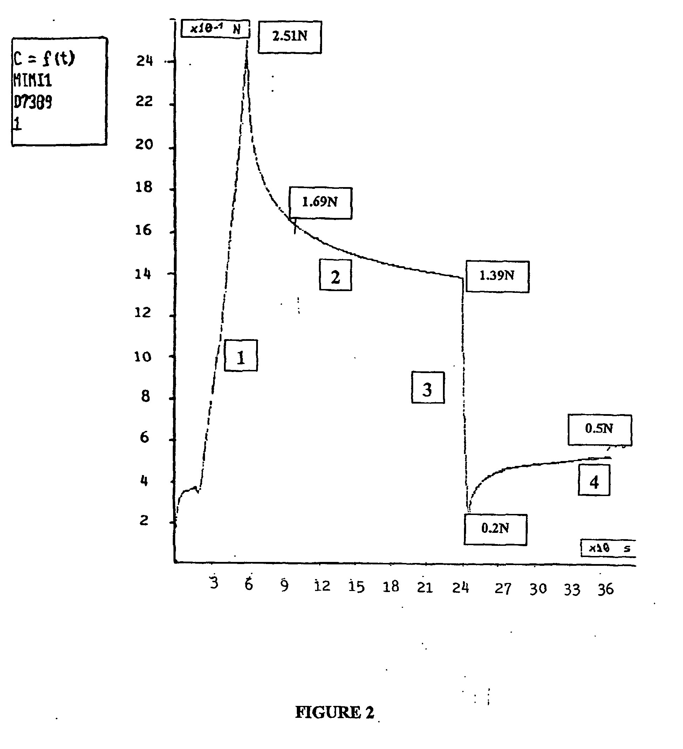

Ces 4 étapes sont représentées dans la figure 1, qui représente la force de résistance et l'élasticité (en Newtons) en fonction du temps (en secondes), du persil substantiellement déshydraté, et dans la figure 2 résultant de l'essai sur la texture sur le persil frais.

### Résultats :

A partir de ces 4 valeurs de force et du tracé de la figure 1, on peut apprécier les paramètres caractérisant la texture du produit végétal substantiellement déshydraté comparativement à la texture du produit de départ frais. La comparaison entre les figures 1 et 2 conduit aux conclusions suivantes :
- le pic à la fin de la phase 1 est appelé "force maximum après compression" ; cette force, caractéristique de l'intégrité de la structure du produit est de 2,51 N pour le persil frais, contre 2,5 N pour le persil substantiellement déshydraté ;
- on définit un "pourcentage de relâche" en faisant le rapport de la force à la fin de la phase 2 à la force maximum ; en l'occurrence, cela donne 1,39/2,51 soit 55,3% pour le persil frais et 1,4/2,5 soit 56% pour le persil substantiellement déshydraté ;
- le dernier paramètre est le "pourcentage d'élasticité" qui est le rapport entre la force à la fin de la phase 4 et la force maximum ; il vaut 0,53/2,51 soit 21% pour le persil frais et 0,5/2,5 soit 20% pour le persil substantiellement déshydraté.

En comparant les figures 1 et 2, on constate qu'elles sont pratiquement superposables, ce qui permet d'affirmer que la texture du persil substantiellement déshydratée de l'invention est quasiment la même que celle du persil de départ frais.

### Exemple 5 :

### Mesure des activités enzymatiques.

Du persil commun de maraîchage, fraîchement cueilli, conservé 2 jours à 4°C est soumis au procédé de dêshydration selon l'invention, puis l'activité polyphénoloxydasique et l'activité peroxydasique sont mesurées.

Les milieux réactionnels sont les suivants :
ο Activité polyphénoloxydasique : Catéchol 32 mM (concentration finale)
   Tampon de Mc Ilvaine, pH 6.8 - 0.2 M (concentration finale) (à la température de la réaction (23°C) la concentration en oxygène dissous - second substrat pour l'activité enzymatique - est de l'ordre de 0.25 mM)
   [suivi spectrophotométrique à 390 nm]
o Activité peroxydasique : Gaiacol 25 mM (concentration finale)
   Peroxyde d'hydrogène 10 mM (concentration finale)
   Tampon de Mc Ilvaine, pH 6.8 - 0.2 M (concentration finale)
   [suivi spectrophotométrique à 470 nm]

Dans les deux cas, le volume final de milieu réactionnel était de 3 ml, avec des prises d'essais d'extraits enzymatiques de 0.015 ml et 0.100 ml.

Tous les tests d'activités se sont déroulés à 23°C.

Les extraits préparés à partir des échantillons de persil, selon l'invention, n'ont pas présenté d'activité polyphénoloxydasique significative.

Les extraits de persil chauffé à 82°C, préparés selon l'invention, n'ont pas d'activité peroxydasique significative.

### Exemple 6 :

Résultats microbiologiques comparatifs entre des plantes traitées selon le procédé de l'invention et des produits frais.

- Le tableau I ci-après donne les résultats microbiologiques obtenus avec du persil, de l'estragon, du basilic frais et traités selon l'invention.

On a procédé par étalement sur des milieux nutritifs appropriés à chaque flore recherchée.

**Tableau I**

| | Herbes Fraîches | | | Herbes traitées selon l'invention | | |
|---|---|---|---|---|---|---|
| | Matières Premières | | | Produits Finis | | |
| | Persil | Basilic | estragon | Persil | Basilic | estragon |
| Germes totaux | 10⁶-10⁷ | 10⁶-10⁷ | 10⁴-10⁵ | <10³ | <10³ | <10³ |
| Levures | 10⁴-10⁵ | 10⁴-10⁵ | 10³-10⁴ | <50 | <50 | <50 |
| Moisissures | 10³-10⁴ | 10³-10⁴ | 10³-10⁴ | <50 | <50 | <50 |

### Exemple 7 :

Résultats comparatifs sur la qualité organoleptique entre des produits traités selon l'invention, des produits frais, des produits lyophilisés et des produits déshydratés selon des procédés de l'art antérieur.

Le taux d'huiles essentielles est donné en ppm par gramme de produit sec.

Il est mesuré par chromatographie en phase gazeuse. Les résultats sont donnés dans le tableau II ci-après.

**Tableau II - Huiles Essentielles ppm/sec**

| | Frais | Invention | Lyophilisé | Déshydraté |
|---|---|---|---|---|
| Persil | 6550 | 4100 | 2730 | 1000 |
| Basilic | 5000 | 2500 | 2000 | 2000 |
| Estragon | 17000 | 16000 | 6700 | 6250 |

## Revendications

1. Produit végétal substantiellement déshydraté, notamment herbe, plante aromatique ou épice, **caractérisé en ce qu'**il présente les caractéristiques suivantes :
- une teneur en sel minéral de 8% à 15% en poids par rapport au poids total dudit produit végétal,
- une teneur en glucide ou en polyol de 4% à 15% en poids par rapport au poids total dudit produit végétal, notamment d'environ 5% à environ 10%,
- une teneur en eau de 10% à 30% en poids par rapport au poids total dudit produit végétal, notamment d'environ 13% à environ 18%,
- une activité de l'eau (aw) de 0,5 à 0,7, notamment d'environ 0,55 à environ 0,65,
- la conservation des propriétés organoleptiques du produit végétal d'origine correspondant, pendant une durée d'au moins 5 mois, et notamment de 5 mois à environ 12 mois, à une température d'au moins 15°C, notamment d'environ 18°C à environ 22°C.
- le produit végétal étant tel qu'il est substantiellement dépourvu de la flore initiale présente sur le produit végétal d'origine correspondant, qu'il est dépourvu de développement de micro-organismes, qu'il présente une imprégnation de sel minéral et de glucide ou polyol, et qu'il présente une inactivation des enzymes principalement responsables de la dégradation de la couleur et de l'odeur.

2. Produit végétal selon la revendication 1, **caractérisé en ce qu'**il présente la conservation des propriétés d'élasticité du produit végétal d'origine correspondant.

3. Produit végétal selon le revendication 1 ou la revendication 2, **caractérisé en ce qu'**il est notamment choisi dans le groupe constitué par :
- les herbes et les plantes aromatiques,
- les épices,
- les algues alimentaires,
- les plantes médicinales,
et notamment parmi : l'aneth, le basilic, le persil, le cerfeuil, la coriandre, le cresson, l'estragon, la menthe, le persil, le laurier, l'oseille, l'origan, le thym, le romarin, la sarriette, la marjolaine, la sauge, le gingembre, le poivre vert, le clou de girofle, le piment, les baies de genièvre, les baies roses, la mélisse, la verveine, la camomille, la passiflore, l'ortie, la vigne rouge, le tussilage, la lavande, la rose, la fleur de jasmin ou la fleur d'oranger.

4. Produit végétal selon l'une des revendications 1 à 3, **caractérisé en ce que** :
- le sel minéral est choisi dans le groupe constitué par des sels halogénés et est notamment le chlorure de sodium,
- le glucide est choisi dans le groupe constitué par les mono, di ou oligosaccharides, et est notamment le saccharose, le fructose, le glucose, le lactose ou le maltose,
- le polyol est notamment le sorbitol ou le glycérol.

5. Utilisation d'une solution contenant :
* 55 % à 70 % d'eau, en poids par rapport au poids total de ladite solution, notamment de 65 % à 70 %,
* 15% à 30% de sel minéral, en poids par rapport au poids total de ladite solution, notamment d'environ 20% à environ 25%,
* 10% à 30% de glucide ou de polyol, en poids par rapport au poids total de ladite solution, notamment d'environ 14% à environ 25% de glucide ou de polyol, et de préférence d'environ 14,5% à environ 16,5% de polyol, et de préférence d'environ 19 % à environ 22 % de glucide
afin d'obtenir un produit végétal substantiellement déshydraté présentant une conservation des propriétés organoleptiques du produit végétal d'origine correspondant, pendant une durée d'au moins 5 mois, et notamment de 5 mois à environ 12 mois, à une température d'au moins 15°C, notamment d'environ 18°C à environ 22°C.

6. Utilisation d'une solution selon la revendication 5, afin d'effectuer par immersion à la fois le blanchiment, l'imprégnation et la déshydratation d'un produit végétal, notamment d'une herbe, d'une plante aromatique ou d'une épice.

7. Procédé d'obtention d'un produit végétal substantiellement déshydraté à partir d'un produit végétal de départ, notamment herbe, plante aromatique ou épice, à l'issue duquel les propriétés organoleptiques du produit végétal d'origine correspondant au produit végétal de départ sont conservées à long terme et à température ambiante, **caractérisé en ce qu'**il comprend les étapes suivantes :
- trempage du produit végétal de départ dans une solution de trempage contenant :
* 55% à 70% d'eau, en poids par rapport au poids total de ladite solution, notamment d'environ 65% à 70%,
* 15% à 30% de sel minéral, en poids par rapport au poids total de ladite solution, notamment d'environ 20% à environ 25%,
* 10% à 30% de glucide ou de polyol, en poids par rapport au poids total de ladite solution, notamment d'environ 14% à environ 25% de glucide ou de polyol, et de préférence d'environ 14,5% à 16,5% de polyol, et de préférence d'environ 19 % à environ 22 % pour le glucide,
pour obtenir un produit végétal partiellement déshydraté.
- séchage du produit végétal partiellement déshydraté obtenu à l'issue de l'étape de trempage afin d'obtenir un produit végétal substantiellement déshydraté présentant :
* une teneur en sel minéral de 8% à 15% en poids par rapport au poids total dudit produit végétal,
* une teneur en glucide ou en polyol de 4% à 15% en poids par rapport au poids total dudit produit végétal, notamment d'environ 5% à environ 10%,
* une teneur en eau de 10% à 30% en poids par rapport au poids total dudit produit végétal, notamment d'environ 13% à environ 18%,
* une activité de l'eau de 0,5 à 0,7, notamment d'environ 0,55 à environ 0,65,
* la conservation des propriétés organoleptiques du produit végétal d'origine correspondant au produit végétal de départ, pendant une durée d'au moins 5 mois, notamment de 5 mois à environ 12 mois, à une température d'au moins 15°C, notamment d'environ 18°C à environ 22°C.

8. Procédé selon la revendication 7, dans lequel le produit végétal de départ peut être :
- un produit végétal frais ou un produit végétal frais mis sous forme surgelée et,
- un produit végétal entier ou, une ou des parties dudit produit végétal telle(s) que tige(s), racine(s), feuille(s) ou fleurs.

9. Procédé selon la revendication 7 ou la revendication 8, dans lequel le produit végétal est notamment choisi dans le groupe constitué par :
- les herbes et les plantes aromatiques,
- les épices,
- les algues alimentaires,
- les plantes médicinales,
et notamment parmi : l'aneth, le basilic, le persil, le cerfeuil, la coriandre, le cresson, l'estragon, la menthe, le persil, le laurier, l'oseille, l'origan, le thym, le romarin, la sarriette, la marjolaine, la sauge, le gingembre, le poivre vert, le clou de girofle, le piment, les baies de genièvre, les baies roses, la mélisse, la verveine, la camomille, la passiflore, l'ortie, la vigne rouge, le tussilage, la lavande, la rose, la fleur de jasmin ou la fleur d'oranger.

10. Procédé selon l'une des revendications 7 à 9, **caractérisé en ce que** dans la solution de trempage :
- le sel minéral est choisi dans le groupe constitué par les sels halogénés et est notamment le chlorure de sodium,
- le glucide est choisi dans le groupe constitué par les mono, di ou oligosaccharides, et est notamment le saccharose, le fructose, le glucose, le lactose ou le maltose,
- le polyol est notamment le sorbitol ou le glycérol.

11. Procédé selon l'une des revendications 7 à 10, **caractérisé en ce que** la solution de trempage peut contenir en outre :
- un composé comportant l'ion magnésium, tel que celui choisi dans le groupe constitué par l'hydroxyde, l'acétate, le carbonate ou le chlorure de magnésium, notamment en une quantité d'environ 0,1% à environ 0,3% en poids par rapport au poids total de la solution de trempage, et de préférence d'environ 0,2% et/ou,
- un acidifiant tel que l'acide citrique, notamment en une quantité d'environ 0,1 % à environ 0,3 % en poids par rapport au poids total de la solution de trempage.

12. Procédé selon l'une des revendications 7 à 11, **caractérisé en ce que** le trempage du produit végétal dans la solution de trempage est effectué à une température d'environ 70°C à environ 120°C, notamment d'environ 85°C à environ 100°C, pendant un temps d'environ 2 minutes à environ 15 minutes, notamment d'environ 5 minutes à environ 10 minutes.

13. Procédé selon l'une des revendications 7 à 12, **caractérisé en ce qu'**il comprend avant l'étape de trempage :
- une étape de lavage du produit végétal de départ, notamment dans de l'eau comportant éventuellement un désinfectant alimentaire tel que l'hypochlorite de sodium, ladite étape de lavage étant éventuellement suivie d'une étape de rinçage, notamment dans de l'eau et,
- une étape d'essorage du produit végétal, notamment par centrifugation.

14. Procédé selon l'une des revendications 7 à 13, **caractérisé en ce qu'**il comprend à l'issue de l'étape de trempage une étape d'essorage afin d'obtenir un produit végétal partiellement déshydraté présentant :
* une teneur en sel minéral d'environ 5% à environ 10% en poids par rapport au poids total dudit produit végétal, notamment d'environ 7% à environ 9%,
* une teneur en glucide ou en polyol d'environ 2% à environ 5 % en poids par rapport au poids total dudit produit végétal, notamment d'environ 3% à environ 4%,
* une teneur en eau d'environ 40% à environ 60% en poids par rapport au poids total dudit produit végétal,
* une activité de l'eau d'environ 0,7 à environ 0,9, notamment d'environ 0,75 à environ 0,85.

15. Procédé selon l'une des revendications 7 à 14, **caractérisé en ce que** l'essorage du produit végétal obtenu à l'issue de l'étape de trempage est effectué par centrifugation, à une vitesse d'environ 300 tours par minute à environ 900 tours par minute, pendant environ 1 minute à environ 3 minutes.

16. Procédé selon l'une des revendications 7 à 15, **caractérisé en ce que** le séchage du produit végétal obtenu à l'issue de l'étape de trempage et d'essorage, est effectué par soufflage d'air chaud à humidité contrôlée, à une température d'environ 40°C à environ 70°C, pendant un temps d'environ 5 minutes à environ 30 minutes.

17. Procédé selon l'une des revendications 7 à 16, **caractérisé en ce qu'**il comprend après l'étape de séchage :
- une étape de coupe du produit végétal substantiellement déshydraté, suivie d'une étape de triage pour séparer les feuilles, les tiges, et les fleurs du susdit produit végétal,
- une étape de conditionnement du produit végétal substantiellement déshydraté, notamment sous atmosphère normale ou sous vide,
lequel peut être conservé soit à la température de 18°C à 22°C, soit à 4°C, soit à -20°C.

18. Procédé selon l'une des revendications 7 à 17, **caractérisé en ce qu'**il comprend les étapes suivantes :
- lavage du produit végétal de départ, notamment dans de l'eau comportant éventuellement un désinfectant alimentaire tel que l'hypochlorite de sodium, ladite étape de lavage étant éventuellement suivie d'une étape de rinçage, notamment dans de l'eau et,
- essorage du produit végétal, notamment par centrifugation par exemple d'environ 300 à environ 500 t/min, pendant environ 1 à environ 3 min.
- trempage du produit végétal de départ dans une solution de trempage contenant :
* 55% à 70% d'eau, en poids par rapport au poids total de la solution de trempage, notamment d'environ 65% à 70%,
* 15% à 30% de sel minéral, en poids par rapport au poids total de la solution de trempage, notamment le chlorure de sodium, notamment d'environ 20% à environ 25%,
* 10% à 30% de glucide, notamment choisi dans le groupe constitué par le saccharose, le fructose, le glucose, le lactose ou le maltose ou, 10% à 30% de polyol, notamment le sorbitol ou le glycérol, en poids par rapport au poids total de la solution de trempage, notamment d'environ 14% à environ 25%, et de préférence d'environ 14,5% à 16,5% de polyol et de préférence d'environ 19% à environ 22% pour le glucide, et éventuellement,
* environ 0,1% à environ 0,3% d'un composé comportant l'ion magnésium, tel que l'hydroxyde, l'acétate, le carbonate ou le chlorure de magnésium, notamment 0,2% en poids par rapport au poids total de la solution de trempage,
ledit trempage étant effectué à une température d'environ 70°C à environ 120°C, notamment d'environ 85°C à environ 100°C, pendant un temps d'environ 2 minutes à environ 15 minutes, notamment d'environ 5 minutes à environ 10 minutes,
- essorage du produit végétal obtenu à l'issue de l'étape de trempage, notamment par centrifugation, à une vitesse d'environ 300 tours par minute à environ 900 tours par minute, pendant environ 1 minute à environ 3 minutes, pour obtenir un produit végétal partiellement déshydraté,
- séchage du produit végétal partiellement déshydraté obtenu à l'issue de l'étape d'essorage, notamment par soufflage d'air chaud à humidité contrôlée, à une température d'environ 40°C à environ 70°C, pendant un temps d'environ 5 minutes à environ 30 minutes,
afin d'obtenir un produit végétal substantiellement déshydraté,
- coupe du produit végétal substantiellement déshydraté, suivie d'une étape de -triage pour séparer les feuilles, les tiges et les fleurs du susdit produit végétal, lequel triage est par exemple effectué par tamisage vibrant et sur colonne densimétrique,
- conditionnement du produit végétal substantiellement déshydraté, notamment sous atmosphère normale ou sous vide, lequel peut être conservé soit à la température de 18°C à 22°C, soit à 4°C, soit à -20°C.

19. Produit végétal substantiellement déshydraté susceptible d'être obtenu par mise en oeuvre du procédé selon l'une des revendications 7 à 18.

## Patentansprüche

1. Pflanzliches Produkt, das im Wesentlichen dehydratisiert ist, insbesondere ein Kraut, eine Aromapflanze oder ein Gewürz, **dadurch gekennzeichnet, dass** es folgende Merkmale aufweist:
- einen Mineralsalzgehalt von 8 bis 15 Gew.-%, bezogen auf das Gesamtgewicht des pflanzlichen Produktes,
- einen Kohlehydrat- oder Polyolgehalt von 4 bis 15 Gew.-%, bezogen auf das Gesamtgewicht des pflanzlichen Produktes, insbesondere von ungefähr 5 bis ungefähr 10 Gew.-%,
- einen Wassergehalt von 10 bis 30 Gew.-%, bezogen auf das Gesamtgewicht des pflanzlichen Produktes, insbesondere von ungefähr 13 bis ungefähr 18 Gew.-%,
- eine Wasseraktivität (aw) von 0,5 bis 0,7, insbesondere ungefähr 0,55 bis ungefähr 0,65,
- die Beibehaltung der organoleptischen Eigenschaften des entsprechenden ursprünglichen pflanzlichen Produktes für eine Dauer von mindestens 5 Monaten, insbesondere von 5 Monaten bis ungefähr 12 Monaten, bei einer Temperatur von mindestens 15 °C, insbesondere von ungefähr 18 °C bis ungefähr 22 °C,
- wobei das pflanzliche Produkt im Wesentlichen frei von der in dem entsprechenden ursprünglichen pflanzlichen Produkt vorhandenen Anfangsflora ist, frei von der Entwicklung von Mikroorganismen ist, mit Mineralsalz und Kohlehydrat oder Polyol imprägniert ist und eine Inaktivierung der Enzyme, die hauptsächlich für die Verschlechterung von Farbe und Geruch verantwortlich sind, aufweist.

2. Pflanzliches Produkt nach Anspruch 1, **dadurch gekennzeichnet, dass** es die Elastizitätseigenschaften des entsprechenden ursprünglichen pflanzlichen Produktes bewahrt.

3. Pflanzliches Produkt nach Anspruch 1 oder 2, **dadurch gekennzeichnet, dass** es insbesondere ausgewählt ist aus der Gruppe bestehend aus:
- Kräutern und Aromapflanzen,
- Gewürzen,
- für Ernährungszwecke verwendeten Algen,
- Heilpflanzen,
und insbesondere aus: Dill, Basilikum, Petersilie, Kerbel, Koriander, Kresse, Estragon, Minze, Petersilie, Lorbeer, Ampfer, Oregano, Thymian, Rosmarin, Bohnenkraut, Majoran, Salbei, Ingwer, grünem Pfeffer, Gewürznelke, Piment, Wacholderbeeren, rosa Pfeffer, Melisse, Eisenkraut, Kamille, Passionsblume, Brennessel, rotem Weinlaub, Huflattich, Lavendel, Rose, Jasminblüte oder Orangenblüte.

4. Pflanzliches Produkt nach einem der Ansprüche 1 bis 3, **dadurch gekennzeichnet, dass**
- das Mineralsalz aus der aus Halogensalzen bestehenden Gruppe ausgewählt ist und insbesondere Natriumchlorid ist,
- das Kohlehydrat ausgewählt ist aus der Gruppe bestehend aus Mono-, Di- oder Oligosacchariden, insbesondere Saccharose, Fructose, Glucose, Lactose oder Maltose,
- das Polyol insbesondere Sorbit oder Glycerin ist.

5. Verwendung einer Lösung, die:
• 55 bis 70 Gew.-% Wasser, bezogen auf das Gesamtgewicht der Lösung, insbesondere 65 bis 70 Gew.-%,
• 15 bis 30 Gew.-% Mineralsalz, bezogen auf das Gesamtgewicht der Lösung, insbesondere ungefähr 20 bis ungefähr 25 Gew.-%,
• 10 bis 30 Gew.-% Kohlehydrat oder Polyol, bezogen auf das Gesamtgewicht der Lösung, insbesondere ungefähr 14 bis ungefähr 25 Gew.-% Kohlehydrat oder Polyol, und vorzugsweise ungefähr 14,5 bis ungefähr 16,5 Gew.-% Polyol und vorzugsweise ungefähr 19 bis ungefähr 22 Gew.-% Kohlehydrat,
enthält, um ein im Wesentlichen dehydratisiertes pflanzliches Produkt zu erhalten, das die organoleptischen Eigenschaften des entsprechenden ursprünglichen pflanzlichen Produktes für eine Dauer von mindestens 5 Monaten und insbesondere von 5 Monaten bis ungefähr 12 Monaten, bei einer Temperatur von mindestens 15 °C, insbesondere von ungefähr 18 °C bis ungefähr 22 °C, bewahrt.

6. Verwendung einer Lösung nach Anspruch 5 zum gleichzeitigen Blanchieren, imprägnieren und Dehydratisieren eines pflanzlichen Produktes, insbesondere eines Krauts, einer Aromapflanze oder eines Gewürzes, durch Eintauchen.

7. Verfahren, um ein im Wesentlichen dehydratisiertes pflanzliches Produkt aus einem pflanzlichen Ausgangsprodukt zu erhalten, insbesondere ein Kraut, eine Aromapflanze oder ein Gewürz, wobei nach dem Verfahren die organoleptischen Eigenschaften des ursprünglichen pflanzlichen Produktes entsprechend dem pflanzlichen Ausgangsprodukt langfristig und bei Umgebungstemperatur erhalten bleiben, **dadurch gekennzeichnet, dass** das Verfahren folgende Schritte umfasst:
- Einweichen des pflanzlichen Ausgangproduktes in einer Einweichlösung, welche enthält:
• 55 bis 70 Gew.-% Wasser, bezogen auf das Gesamtgewicht der Lösung, insbesondere ungefähr 65 bis 70 Gew.-%,
• 15 bis 30 Gew.-% Mineralsalz, bezogen auf das Gesamtgewicht der Lösung, insbesondere ungefähr 20 bis ungefähr 25 Gew.-%,
• 10 bis 30 Gew.-% Kohlehydrat oder Polyol, bezogen auf das Gesamtgewicht der Lösung, insbesondere ungefähr 14 bis ungefähr 25 Gew.-% Kohlehydrat oder Polyol, und vorzugsweise ungefähr 14,5 bis 16,5 Gew.-% Polyol und vorzugsweise ungefähr 19 bis ungefähr 22 Gew.-% Kohlehydrat,
um ein partiell dehydratisiertes pflanzliches Produkt zu erhalten,
Trocknen des am Ende des Einweichschritts erhaltenen partiell dehydratisierten pflanzlichen Produktes, um ein im Wesentlichen dehydratisiertes pflanzliches Produkt zu erhalten, welches
• einen Mineralsalzgehalt von 8 bis 15 Gew.-%, bezogen auf das Gesamtgewicht des pflanzlichen Produktes,
• einen Kohlehydrat- oder Polyolgehalt von 4 bis 15 Gew.-%, bezogen auf das Gesamtgewicht des pflanzlichen Produktes, insbesondere von ungefähr 5 bis ungefähr 10 Gew.-%,
• einen Wassergehalt von 10 bis 30 Gew.-%, bezogen auf das Gesamtgewicht des pflanzlichen Produktes, insbesondere von ungefähr 13 bis ungefähr 18 Gew.-%,
• eine Wasseraktivität von 0,5 bis 0,7, insbesondere ungefähr 0,55 bis ungefähr 0,65,
• Beibehaltung der organoleptischen Eigenschaften des ursprünglichen pflanzlichen Produktes entsprechend dem pflanzlichen Ausgangprodukt für eine Dauer von mindestens 5 Monaten, insbesondere von 5 Monaten bis ungefähr 12 Monaten, bei einer Temperatur von mindestens 15 °C, insbesondere von ungefähr 18 °C bis ungefähr 22 °C,
aufweist.

8. Verfahren nach Anspruch 7, in welchem das pflanzliche Ausgangsprodukt
- ein frisches pflanzliches Produkt oder ein tiefgekühltes frisches pflanzliches Produkt und
- ein komplettes pflanzliches Produkt oder ein Teil oder Teile dieses pflanzlichen Produktes, wie Stängel, Wurzel(n), Blatt (Blätter) oder Blüten, sein kann.

9. Verfahren nach Anspruch 7 oder 8, wobei das pflanzliche Produkt insbesondere ausgewählt ist aus der Gruppe bestehend aus:
- Kräutern und Aromapflanzen,
- Gewürzen,
- für Ernährungszwecke verwendeten Algen,
- Heilpflanzen,
und insbesondere aus: Dill, Basilikum, Petersilie, Kerbel, Koriander, Kresse, Estragon, Minze, Petersilie, Lorbeer, Ampfer, Oregano, Thymian, Rosmarin, Bohnenkraut, Marjoran, Salbei, Ingwer, grünem Pfeffer, Gewürznelke, Piment, Wacholderbeeren, rosa Pfeffer, Melisse, Eisenkraut, Kamille, Passionsblume, Brennessel, rotem Weinlaub, Huflattich, Lavendel, Rose, Jasminblüte oder Orangenblüte.

10. Verfahren nach einem der Ansprüche 7 bis 9, **dadurch gekennzeichnet, dass** in der Einweichlösung
- das Mineralsalz aus der aus Halogensalzen bestehenden Gruppe ausgewählt ist und insbesondere Natriumchlorid ist,
- das Kohlehydrat aus der aus Mono-, Di- oder Oligosacchariden bestehenden Gruppe ausgewählt und insbesondere Saccharose, Fructose, Glucose, Lactose oder Maltose ist,
- das Polyol insbesondere Sorbit oder Glycerin ist.

11. Verfahren nach einem der Ansprüche 7 bis 10, **dadurch gekennzeichnet, dass** die Einweichlösung außerdem:
- eine das Magnesiumion enthaltende Verbindung, wie eine aus der Gruppe bestehend aus Magnesiumhydroxid, -acetat, -carbonat oder -chlorid ausgewählte Verbindung, insbesondere in einer Menge von ungefähr 0,1 bis ungefähr 0,3 Gew.-%, bezogen auf das Gesamtgewicht der Einweichlösung, und vorzugsweise ungefähr 0,2 Gew.-%,
und/oder
- ein Säuerungsmittel, wie Citronensäure, insbesondere in einer Menge von ungefähr 0,1 bis ungefähr 0,3 Gew.-%, bezogen auf das Gesamtgewicht der Einweichlösung,
enthalten kann.

12. Verfahren nach einem der Ansprüche 7 bis 11, **dadurch gekennzeichnet, dass** das Einweichen des pflanzlichen Produktes in der Einweichlösung bei einer Temperatur von ungefähr 70 °C bis ungefähr 120 °C, insbesondere ungefähr 85 °C bis ungefähr 100 °C, für eine Dauer von ungefähr 2 Minuten bis ungefähr 15 Minuten, insbesondere ungefähr 5 Minuten bis ungefähr 10 Minuten, erfolgt.

13. Verfahren nach einem der Ansprüche 7 bis 12, **dadurch gekennzeichnet, dass** es vor dem Einweichschritt beinhaltet:
- Waschen des pflanzlichen Ausgangsproduktes, insbesondere in Wasser, das gegebenenfalls ein Nahrungsmittel-Desinfektionsmittel wie Natriumhypochlorit enthält, wobei dem Waschschritt gegebenenfalls ein Spülschritt, insbesondere mit Wasser, folgt,
- Schleudern des pflanzlichen Produktes, insbesondere durch Zentrifugieren.

14. Verfahren nach einem der Ansprüche 7 bis 13, **dadurch gekennzeichnet, dass** es nach dem Einweichschritt einen Schleuderschritt beinhaltet, um ein partiell dehydratisiertes pflanzliches Produkt zu erhalten, welches aufweist:
• einen Mineralsalzgehalt von ungefähr 5 bis ungefähr 10 Gew.-%, bezogen auf das Gesamtgewicht des pflanzlichen Produktes, insbesondere von ungefähr 7 bis ungefähr 9 Gew.-%,
• einen Kohlehydrat- oder Polyolgehalt von ungefähr 2 bis ungefähr 5 Gew.-%, bezogen auf das Gesamtgewicht des pflanzlichen Produktes, insbesondere von ungefähr 3 bis ungefähr 4 Gew.-%,
• einen Wassergehalt von ungefähr 40 bis ungefähr 60 Gew.-%, bezogen auf das Gesamtgewicht des pflanzlichen Produktes,
• eine Wasseraktivität von ungefähr 0,7 bis ungefähr 0,9, insbesondere ungefähr 0,75 bis ungefähr 0,85.

15. Verfahren nach einem der Ansprüche 7 bis 14, **dadurch gekennzeichnet, dass** das Schleudern des am Ende des Einweichschritts erhaltenen pflanzlichen Produktes durch Zentrifugieren bei einer Geschwindigkeit von ungefähr 300 Umdrehungen pro Minute bis ungefähr 900 Umdrehungen pro Minute für ungefähr 1 Minute bis ungefähr 3 Minuten erfolgt.

16. Verfahren nach einem der Ansprüche 7 bis 15, **dadurch gekennzeichnet, dass** das Trocknen des nach dem Einweichschritt und dem Schleuderschritt erhaltenen pflanzlichen Produktes durch Blasen von heißer Luft bei geregelter Feuchtigkeit bei einer Temperatur von ungefähr 40 °C bis ungefähr 70 °C für eine Dauer von ungefähr 5 Minuten bis ungefähr 30 Minuten erfolgt.

17. Verfahren nach einem der Ansprüche 7 bis 16, **dadurch gekennzeichnet, dass** es nach dem Trocknungsschritt beinhaltet:
- einen Schritt des Schneidens des im Wesentlichen dehydratisierten pflanzlichen Produktes, gefolgt von einem Sortierschritt, um Blätter, Stängel und Blüten des genannten pflanzlichen Produktes zu trennen,
- einen Schritt des Verpackens des im Wesentlichen dehydratisierten pflanzlichen Produktes, insbesondere unter Normalatmosphäre oder unter Vakuum, das bei der Temperatur von 18 °C bis 22 °C aufbewahrt werden kann, oder bei 4 °C oder bei -20 °C.

18. Verfahren nach einem der Ansprüche 7 bis 17, **dadurch gekennzeichnet, dass** es die folgenden Schritte beinhaltet:
- Waschen des pflanzlichen Ausgangsproduktes, insbesondere in Wasser, das gegebenenfalls ein Nahrungsmittel-Desinfektionsmittel wie Natriumhypochlorit enthält, wobei dem Waschschritt gegebenenfalls ein Spülschritt, insbesondere mit Wasser, folgt,
- Schleudern des pflanzlichen Produktes, insbesondere durch Zentrifugieren z.B. bei ungefähr 300 bis ungefähr 500 UpM für ungefähr 1 bis ungefähr 3 min,
- Einweichen des pflanzlichen Produktes in einer Einweichlösung, welche enthält:
• 55 bis 70 Gew.-% Wasser, bezogen auf das Gesamtgewicht der Einweichlösung, insbesondere ungefähr 65 bis 70 Gew.-%,
• 15 bis 30 Gew.-% Mineralsalz, bezogen auf das Gesamtgewicht der Einweichlösung, insbesondere Natriumchlorid, insbesondere ungefähr 20 bis ungefähr 25 Gew.-%,
• 10 bis 30 Gew.-% Kohlehydrat, insbesondere ausgewählt aus der Gruppe bestehend aus Saccharose, Fructose, Glucose, Lactose oder Maltose, oder 10 bis 30 Gew.-% Polyol, insbesondere Sorbit oder Glycerin, bezogen auf das Gesamtgewicht der Einweichlösung, insbesondere ungefähr 14 bis ungefähr 25 Gew.-%, und vorzugsweise ungefähr 14,5 bis 16,5 Gew.-% Polyol und vorzugsweise ungefähr 19 bis ungefähr 22 Gew.-% Kohlehydrat, und gegebenenfalls
• ungefähr 0,1 bis ungefähr 0,3 Gew.-% einer das Magnesiumion enthaltenden Verbindung, wie Magnesiumhydroxid, -acetat, -carbonat oder -chlorid, insbesondere 0,2 Gew.-%, bezogen auf das Gesamtgewicht der Einweichlösung,
wobei das Einweichen bei einer Temperatur von ungefähr 70 °C bis ungefähr 120 °C, insbesondere ungefähr 85 °C bis ungefähr 100 °C, für eine Dauer von ungefähr 2 Minuten bis ungefähr 15 Minuten, insbesondere ungefähr 5 Minuten bis ungefähr 10 Minuten, erfolgt,
- Schleudern des am Ende des Einweichschritts erhaltenen pflanzlichen Produktes, insbesondere durch Zentrifugieren bei einer Geschwindigkeit von ungefähr 300 Umdrehungen pro Minute bis ungefähr 900 Umdrehungen pro Minute für ungefähr 1 Minute bis ungefähr 3 Minuten, um ein partiell dehydratisiertes pflanzliches Produkt zu erhalten,
- Trocknen des nach dem Schleuderschritt erhaltenen partiell dehydratisierten pflanzlichen Produktes, insbesondere durch Blasen von heißer Luft bei geregelter Feuchtigkeit bei einer Temperatur von ungefähr 40 °C bis ungefähr 70 °C für eine Dauer von ungefähr 5 Minuten bis ungefähr 30 Minuten, um ein im Wesentlichen dehydratisiertes pflanzliches Produkt zu erhalten,
- Schneiden des im Wesentlichen dehydratisierten pflanzlichen Produktes, gefolgt von einem Sortierschritt zum Trennen der Blätter, Stängel und Blüten des genannten pflanzlichen Produktes, wobei dieses Sortieren beispielsweise mit einem Schwingsieb und auf einer densimetrischen Säule erfolgt,
- Verpacken des im Wesentlichen dehydratisierten pflanzlichen Produktes, insbesondere unter Normalatmosphäre oder unter Vakuum, das bei einer Temperatur von 18 °C bis 22 °C oder bei 4 °C oder bei -20 °C aufbewahrt werden kann.

19. Pflanzliches Produkt, das im Wesentlichen dehydratisiert ist und das durch Anwendung des Verfahrens nach einem der Ansprüche 7 bis 18 erhalten wird.

## Claims

1. Substantially dehydrated plant product, in particular herb, aromatic plant or spice, **characterised in that** it presents the following characteristics:
- a mineral salt content of 8% to 15% by weight relative to the total weight of the said plant product,
- a glucide or polyol content of 4% to 15% by weight relative to the total weight of the said plant product, in particular approximately 5% to approximately 10%,
- a water content of 10% to 30% by weight relative to the total weight of the said plant product, in particular approximately 13% to approximately 18%,
- a water activity (wa) of 0.5 to 0.7, in particular approximately 0.55 to approximately 0.65,
- the preservation of the organoleptic properties of the corresponding original plant product, for a period of at least 5 months, and in particular 5 months to approximately 12 months, at a temperature of at least 15°C, in particular approximately 18°C to approximately 22°C.
- the plant product being such as it is substantially devoid of the starting flora present on the corresponding original plant product, that it is devoid of the development of microorgansims, that it presents an impregnation of mineral salt and glucide or polyol and that it presents an inactivation of the enzymes principally responsible for the degradation of the colour and of the smell.

2. Plant product according to claim 1, **characterised in that** it presents the preservation of the elasticity properties of the corresponding original plant product.

3. Plant product according to claim 1 or claim 2, **characterised in that** it is in particular chosen from the group constituted by:
- herbs and aromatic plants,
- spices,
- algae used for food purposes,
- medicinal plants,
and in particular from: dill, basil, parsley, chervil, coriander, cress, tarragon, mint, parsley, bay, sorrel, oregano, thyme, rosemary, savory, marjoram, sage, ginger, green pepper, clove, pimento, juniper berries, pink peppers, balm, vervain, camomile, passion flower, nettle, red vine, coltsfoot, lavender, rose, jasmine flower or orange flower.

4. Plant product according to one of claims 1 to 3, **characterised in that**:
- the mineral salt is chosen from the group constituted by the halogenated salts and is in particular sodium chloride,
- the glucide is chosen from the group constituted by the mono-, di- or oligosaccharides, and is in particular sucrose, fructose, glucose, lactose or maltose,
- the polyol is in particular sorbitol or glycerol.

5. Use of a solution containing:
* 55 % to 70 % of water, by weight relative to the total weight of the said solution, in particular 65 % to 70 %,
* 15% to 30% of mineral salt, by weight relative to the total weight of the said solution, in particular approximately 20% to approximately 25%,
* 10% to 30% of glucide or of polyol, by weight relative to the total weight of the said solution, in particular approximately 14% to approximately 25% of glucide or of polyol, and preferably approximately 14.5% to approximately 16.5% of polyol, and preferably approximately 19 % to approximately 22 % of glucide
in order to obtain a substantially dehydrated plant product presenting a preservation of the organoleptic properties of the corresponding original plant product, for a period of at least 5 months, and in particular 5 months to approximately 12 months, at a temperature of at least 15°C, in particular approximately 18°C to approximately 22°C

6. Use of a solution according to claim 5, in order to carry out by immersion at one and the same time the blanching, the impregnation and the dehydration of a plant product, in particular of a herb, of an aromatic plant or of a spice.

7. Process for obtaining a substantially dehydrated plant product from a starting plant product, in particular herb, aromatic plant or spice, at the end of which the organoleptic properties of the original plant product corresponding to the starting plant product are preserved long-term and at ambient temperature, **characterised in that** it comprises the following stages:
- steeping of the starting plant product in a steeping solution containing:
* 55% to 70% of water, by weight relative to the total weight of the said solution, in particular approximately 65% to 70%,
* 15% to 30% of mineral salt, by weight relative to the total weight of the said solution, in particular approximately 20% to approximately 25%,
* 10% to 30% of glucide or of polyol, by weight relative to the total weight of the said solution, in particular approximately 14% to approximately 25% of glucide or of polyol, and preferably approximately 14.5% to 16.5% of polyol, and preferably approximately 19 % to approximately 22 % for the glucide,
in order to obtain a partially dehydrated plant product.
- drying of the partially dehydrated plant product obtained at the end of the steeping stage in order to obtain a substantially dehydrated plant product presenting:
* a mineral salt content of 8% to 15% by weight relative to the total weight of the said plant product,
* a glucide or polyol content of 4% to 15% by weight relative to the total weight of the said plant product, in particular approximately 5% to approximately 10%,
* a water content of 10% to 30% by weight relative to the total weight of the said plant product, in particular approximately 13% to approximately 18%,
* a water activity of 0.5 to 0.7, in particular approximately 0.55 to approximately 0.65,
* the preservation of the organoleptic properties of the original plant product corresponding to the starting plant product, for a period of at least 5 months, in particular 5 months to approximately 12 months, at a temperature of at least 15°C, in particular approximately 18°C to approximately 22°C.

8. Process according to claim 7, in which the starting plant product can be:
- a fresh plant product or a quick-frozen fresh plant product and,
- a whole plant product or a part or parts of the said plant product such as stem(s), root(s), leaf (leaves) or flowers.

9. Process according to claim 7 or claim 8, in which the plant product is in particular chosen from the group constituted by:
- herbs and aromatic plants,
- spices,
- algae used for food purposes,
- medicinal plants,
and in particular from: dill, basil, parsley, chervil, coriander, cress, tarragon, mint, parsley, bay, sorrel, oregano, thyme, rosemary, savory, marjoram, sage, ginger, green pepper, clove, pimento, juniper berries, pink peppers, balm, vervain, camomile, passion flower, nettle, red vine, coltsfoot, lavender, rose, jasmine flower or orange flower.

10. Process according to one of claims 7 to 9, **characterised in that** in the steeping solution:
- the mineral salt is chosen from the group constituted by the halogenated salts and is in particular sodium chloride,
- the glucide is chosen from the group constituted by the mono-, di- or oligosaccharides, and is in particular sucrose, fructose, glucose, lactose or maltose,
- the polyol is in particular sorbitol or glycerol.

11. Process according to one of claims 7 to 10, **characterised in that** the steeping solution can also contain:
- a compound comprising the magnesium ion, such as that chosen from the group constituted by magnesium hydroxyde, acetate, carbonate or chloride, in particular in a quantity of approximately 0.1% to approximately 0.3% by weight relative to the total weight of the steeping solution, and preferably approximately 0.2% and/or,
- an acidifier such as citric acid, in particular in a quantity of approximately 0.1 % to approximately 0.3 % by weight relative to the total weight of the steeping solution.

12. Process according to one of claims 7 to 11, **characterised in that** the steeping of the plant product in the steeping solution is carried out at a temperature of approximately 70°C to approximately 120°C, in particular approximately 85°C to approximately 100°C, for a period of approximately 2 minutes to approximately 15 minutes, in particular approximately 5 minutes to approximately 10 minutes.

13. Process according to one of claims 7 to 12, **characterised in that** it comprises before the steeping stage:
- a stage of washing the starting plant product, in particular in water optionally containing a food disinfectant such as sodium hypochlorite, the said washing stage being optionally followed by a stage of rinsing, in particular in water and,
- a spin-drying stage for the plant product, in particular by centrifugation.

14. Process according to one of claims 7 to 13, **characterised in that** it comprises at the end of the steeping stage a spin-drying stage in order to obtain a partially dehydrated plant product presenting:
* a mineral salt content of approximately 5% to approximately 10% by weight relative to the total weight of the said plant product, in particular approximately 7% to approximately 9%,
* a glucide or polyol content of approximately 2% to approximately 5 % by weight relative to the total weight of the said plant product, in particular approximately 3% to approximately 4%,
* a water content of approximately 40% to approximately 60% by weight relative to the total weight of the said plant product,
* a water activity of approximately 0.7 to approximately 0.9, in particular approximately 0.75 to approximately 0.85.

15. Process according to one of claims 7 to 14, **characterised in that** the spin-drying of the plant product obtained at the end of the steeping stage is carried out by centrifugation, at a speed of approximately 300 revolutions per minute to approximately 900 revolutions per minute, for approximately 1 minute to approximately 3 minutes.

16. Process according to one of claims 7 to 15, **characterised in that** the drying of the plant product obtained at the end of the steeping and spin-drying stage is carried out by blowing of hot air at controlled humidity, at a temperature of approximately 40°C to approximately 70°C, for a period of approximately 5 minutes to approximately 30 minutes.

17. Process according to one of claims 7 to 16, **characterised in that** it comprises after the drying stage:
- a stage of cutting the substantially dehydrated plant product, followed by a sorting stage to separate the leaves, the stems, and the flowers of the aforementioned plant product,
- a stage of packaging of the substantially dehydrated plant product, in particular under normal atmosphere or under vacuum,
which can be kept either at the temperature of 18°C to 22°C, or at 4°C, or at -20°C.

18. Process according to one of claims 7 to 17, **characterised in that** it comprises the following stages:
- washing of the starting plant product, in particular in water optionally containing a food disinfectant such as sodium hypochlorite, the said washing stage being optionally followed by a stage of rinsing, in particular in water and,
- spin-drying of the plant product, in particular by centrifugation for example at approximately 300 to approximately 500 rpm, for approximately 1 min to approximately 3 min.
- steeping of the original plant product in a steeping solution containing:
* 55% to 70% of water, by weight relative to the total weight of the steeping solution, in particular approximately 65% to 70%,
* 15% to 30% of mineral salt, by weight relative to the total weight of the steeping solution, in particular sodium chloride, in particular approximately 20% to approximately 25%,
* 10% to 30% of glucide, in particular chosen from the group constituted by sucrose, fructose, glucose, lactose or maltose or, 10% to 30% of polyol, in particular sorbitol or glycerol, by weight relative to the total weight of the steeping solution, in particular approximately 14% to approximately 25%, and preferably approximately 14.5% to 16.5% of polyol and preferably approximately 19% to approximately 22% for the glucide, and optionally,
* approximately 0.1% to approximately 0.3% of a compound containing the magnesium ion, such as magnesium hydroxide, acetate, carbonate or chloride, in particular 0.2% by weight relative to the total weight of the steeping solution,
the said steeping stage being carried out at a temperature of approximately 70°C to approximately 120°C, in particular approximately 85°C to approximately 100°C, for a period of approximately 2 minutes to approximately 15 minutes, in particular approximately 5 minutes to approximately 10 minutes,
- spin-drying of the plant product obtained at the end of the steeping stage, in particular by centrifugation, at a speed of approximately 300 revolutions per minute to approximately 900 revolutions per minute, for approximately 1 minute to approximately 3 minutes, in order to obtain a partially dehydrated plant product,
- drying of the partially dehydrated plant product obtained at the end of the spin-drying stage, in particular by blowing of hot air at controlled humidity, at a temperature of approximately 40°C to approximately 70°C, for a period of approximately 5 minutes to approximately 30 minutes,
in order to obtain a substantially dehydrated plant product,
- cutting of the substantially dehydrated plant product, followed by a sorting stage to separate the leaves, the stems and the flowers of the aforementioned plant product, which sorting is for example carried out by vibrating screening and on a densimetric column,
- packaging of the substantially dehydrated plant product, in particular under normal atmosphere or under vacuum, which can be kept either at the temperature of 18°C to 22°C, or at 4°C, or at -20°C.

19. Substantially dehydrated plant product capable of being obtained by implementation of the process according to one of claims 7 to 18.
